# FASCICULE DE BREVET EUROPEEN

(11) **EP 2 358 776 B1**
(45) Date de publication et mention de la délivrance du brevet: **24.10.2012**
(21) Numéro de dépôt: 09763834.0
(22) Date de dépôt: 17.11.2009
(51) Int. Cl.: C08F 297/04, C08L 53/02, B60C 1/00

(54) **NOUVEAU COPOLYMERE A BLOC ELASTOMERIQUE THERMOPLASTIQUE, SON PROCEDE DE PREPARATION, SON UTILISATION DANS UNE COMPOSITION ELASTOMERE**
NEUES COPOLYMER MIT THERMOPASTISCHEM ELASTOMERBLOCK, HERSTELLUNGSVERFAHREN DAFÜR UND VERWENDUNG FÜR EINE ELASTOMERZUSAMMENSETZUNG
NOVEL COPOLYMER WITH THERMOPLASTIC ELASTOMER BLOCK, METHOD FOR PREPARING SAME AND USE THEREOF IN AN ELASTOMER COMPOSITION

(30) Priorité: 19.11.2008 FR 0857844
(43) Date de publication de la demande: 24.08.2011
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: LESAGE, Pierre, F-63000 Clermont-Ferrand (FR); CUSTODERO, Emmanuel, F-63400 Chamalieres (FR); THUILLIEZ, julien, F- 63100 Clermont-Ferrand (FR); GREIVELDINGER, Marc, F-63140 Chatel Guyon (FR)
(74) Mandataire: Le Cam, Véronique Marie Christine
(86) Numéro de dépôt international: PCT/EP2009/008154
(87) Numéro de publication internationale: WO 2010/057611

(56) Documents cités:
- US-A- 4 946 899
- US-A- 5 428 111

## Description

L'invention concerne un nouvel élastomère thermoplastique de type copolymère blocs comprenant un bloc élastomérique, linéaire, branché ou étoilé composé d'un polyisobutylène et au moins un bloc terminal styrénique thermoplastique. Cet élastomère thermoplastique peut être avantageusement utilisé dans des compositions élastomères destinées aux objets "pneumatiques", c'est-à-dire, par définition, des objets qui prennent leur forme utilisable quand on les gonfle d'air ou d'un gaz de gonflage équivalent, du fait de ses propriétés d'étanchéité aux gaz, plus particulièrement aux objets pneumatiques pour véhicules automobiles.

Les élastomères thermoplastiques (en abrégé "TPE") sont des composés présentant à la fois des propriétés à l'état cuit d'élastomères et des propriétés spécifiques des composés thermoplastiques notamment une mise en oeuvre facilitée à l'état fondu.

De structure intermédiaire entre polymères thermoplastiques et élastomères, ils sont constitués de séquences rigides thermoplastiques, par exemple polystyrène, reliées par des séquences souples élastomériques, par exemple polybutadiène, polyisoprène, poly(éthylène/butylène), ou encore polyisobutylène. Typiquement, chacun de ces segments ou blocs contient au minimum plus de 5, généralement plus de 10 unités de base.

Une littérature abondante décrit ce type de composés qui présentent l'avantage, par rapport aux simples mélanges de composés élastomériques et de composés thermoplastiques, d'une bonne cohésion structurelle du matériau.

Parmi les copolymères blocs élastomériques thermoplastiques, on peut citer les élastomères thermoptastiques styréniques (en abrégé "TPS"). Ils comportent un bloc élastomérique central et des blocs styréniques terminaux. Il a été développé des TPS dont le bloc élastomérique central est un polyisobutylène. Ces élastomères thermoplastiques sont connus sous l'abréviation SIBS (styrène-isobutylène-styrène).

Diverses architectures de ces copolymères blocs SIBS, contrôlées par leur procédé de synthèse, ont été décrites dans l'art antérieur.

On peut citer par exemple le brevet US 4,946,899 qui illustre des SIBS linéaires triblocs et des SIBS étoilés à trois branches dans lesquels le bloc polyisobutylène est étoilé à trois branches. On peut également citer US 5,428,111 qui décrit un procédé pour préparer de tels SIBS par polymérisation de monomère styrénique par amorçage au moyen de polyisobutylènes vivants, ou encore US 5,260,383 qui décrit la synthèse de SIBS par réaction d'un polymère styrénique vivant sur un polyisobutylène téléchélique.

Par la suite d'autres SIBS possédant des architectures variées ont été décrits, tels que notamment des SIBS étoilés multibranches et des SIBS hyperbranchés par exemple dans les publications J.E. Puskas, C.J. Wilds, J. Polym. Sci. : Part A : Polym. Chem. 36, 85 (1998) ; J.E. Puskas, W. Pattern, P. M. Wetmore, V. Krukonis, Rubber Chem. Technol. 72, 559 (1998) ; S. Jacob, J.P. Kennedy, Advances in Polym. Sci, 146, 1 (1999);; J.E. Puskas, Y. Kwon, P. Antony, A.K. Bhowmick, J. Polym. Sci.: Part A : Polym. Chem. 43, 1811 (2005), ou encore dans le brevet US 5,721,331.

De nombreux documents décrivent certains SIBS, dans des applications diverses liées aux propriétés spécifiques de ces élastomères, tout d'abord pour des applications biomédicales puis dans diverses applications propres aux élastomères TPE, aussi variées que matériel médical, pièces pour automobile ou pour électroménager, gaines pour fils électriques, pièces d'étanchéité ou élastiques (voir par exemple les documents EP 1 431 343, EP 1 561 783, EP 1 566 405, WO 2005/103146).

Par ailleurs, dans un bandage pneumatique conventionnel du type "tubeless" (c'est-à-dire sans chambre à air), la face radialement interne comporte une couche étanche à l'air (ou plus généralement à tout gaz de gonflage dudit bandage pneumatique) qui permet le gonflement et le maintien sous pression du bandage pneumatique. Ses propriétés d'étanchéité lui permettent de garantir un taux de perte de pression relativement faible, permettant de maintenir le bandage gonflé en état de fonctionnement normal pendant une durée suffisante, normalement de plusieurs semaines ou plusieurs mois. Elle a également pour fonction de protéger l'armature de carcasse de la diffusion d'air provenant de l'espace intérieur au bandage.

Cette fonction de couche interne ou "gomme intérieure" ("inner liner") étanche est aujourd'hui remplie par des compositions à base de caoutchouc butyle (copolymère d'isobutylène et d'isoprène), reconnues depuis fort longtemps pour leurs excellentes propriétés d'étanchéité.

Toutefois, un inconvénient bien connu des compositions à base de caoutchouc ou élastomère butyle est qu'elles présentent des pertes hystérétiques importantes, qui plus est sur un spectre large de température, inconvénient qui pénalise la résistance au roulement des bandages pneumatiques.

Le but de la présente invention est de proposer de nouveaux matériaux, notamment utilisables dans des compositions de caoutchouc en couche interne étanche de pneumatique en améliorant les propriétés hystérétiques desdites compositions.

Les Demanderesses ont découvert, lors de leurs recherches, un nouvel élastomère thermoplastique de type SIBS. Ce nouvel SIBS, lorsqu'il est utilisé en composition éventuellement étendu avec une huile d'extension, induit à ladite composition des propriétés dynamiques surprenantes et inattendues, qui rendent cette composition particulièrement adaptée pour la fabrication de couches internes d'étanchéité, notamment pour pneumatiques de véhicules automobiles. Avantageusement, ces nouveaux SIBS permettent l'obtention de couches internes d'étanchéité présentant des propriétés d'hystérèse améliorées tout en offrant à ces dites couches internes de très bonnes propriétés d'étanchéité.

Ainsi, selon un premier objet, la présente invention concerne un nouvel élastomère thermoplastique SIBS de structure spécifique.

Selon un deuxième objet, l'invention concerne un procédé de préparation de ce nouvel élastomère thermoplastique SIBS de structure spécifique.

Un autre objet de l'invention est une composition élastomère comprenant ce nouvel élastomère thermoplastique SIBS de structure spécifique à titre majoritaire.

Dans la présente description, sauf indication expresse différente, tous les pourcentages (%) indiqués sont des % en poids.

Dans la description de l'invention qui suit les expressions "élastomère SIBS", "copolymère à blocs élastomérique thermoplastique" et "copolymère à blocs" sont équivalentes et pourront être utilisées indifféremment.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

L'invention a donc pour objet un nouvel élastomère thermoplastique styrénique sous forme d'un copolymère à blocs comprenant au moins un bloc élastomérique « polyisobutylène » composé majoritairement du monomère isobutène polymérisé et, au moins à l'une des extrémités du copolymère à blocs, un bloc styrénique constitué d'au moins un composé styrénique polymérisé. Ce copolymère élastomérique thermoplastique à blocs présente les caractéristiques structurelles suivantes:
1) le bloc polyisobutylène présente une masse moléculaire moyenne en nombre ("Mn") allant de 25 000 g/mol à 350 000g/mol et une température de transition vitreuse ("tg") inférieure ou égale à -20°C, et comprend un taux d'unités issues d'un ou de plusieurs diènes conjugués insérées dans la chaîne polymérique allant de 0,5% à 6% en poids par rapport au poids du bloc polyisobutylène,
2) le ou les blocs styréniques représentent au plus 16% en poids du poids total du copolymère à blocs.

Ainsi, le nouvel élastomère thermoplastique styrénique sous forme d'un copolymère à blocs comprend au moins deux blocs.

Selon une variante de l'invention, le copolymère à blocs élastomérique thermoplastique se présente sous une forme linéaire tribloc. Le copolymère à blocs se compose alors d'un bloc polyisobutylène central et de deux blocs styréniques terminaux à chacune des deux extrémités du bloc polyisobutylène.

Selon une autre variante de l'invention, le copolymère à blocs élastomérique thermoplastique se présente sous une forme étoilée à au moins trois branches. Le copolymère à blocs se compose alors d'un bloc polyisobutylène central étoilé à au moins trois branches et d'un bloc styrénique à l'extrémité de chacune des branches du polyisobutylène. Le nombre de branches du polyisobutylène varie de 3 à 12, et de préférence de 3 à 6.

Selon une autre variante de l'invention, le copolymère à blocs élastomérique thermoplastique se présente sous une forme branché ou dendrimère. Le copolymère à blocs se compose alors d'un bloc polyisobutylène central branché ou dendrimère et d'un bloc styrénique à l'extrémité des branches du polyisobutylène dendrimère.

Selon l'invention, on préfère que la température de transition vitreuse (Tg, mesurée selon ASTM D3418) du copolymère à blocs élastomérique thermoplastique soit inférieure à - 20°C, plus préférentiellement inférieure à - 40°C. Une valeur de Tg supérieure à ces minima peut diminuer les performances de la couche étanche lors d'une utilisation à très basse température ; pour une telle utilisation, la Tg du copolymère à bloc est plus préférentiellement encore inférieure à - 50°C.

La masse moléculaire moyenne en nombre (notée Mn) du copolymère à blocs est préférentiellement comprise entre 30 000 et 500 000 g/mol, plus préférentiellement comprise entre 40 000 et 400 000 g/mol. En dessous des minima indiqués, la cohésion entre les chaînes d'élastomère SIBS, notamment en raison de sa dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la souplesse de la couche étanche aux gaz. Ainsi, on a constaté qu'une valeur comprise dans un domaine de 50 000 à 300 000 g/mol était particulièrement bien adaptée, notamment à une utilisation du copolymère à blocs dans une composition pour un bandage pneumatique.

La valeur de l'indice de polydispersité Ip (rappel : Ip = Mw/Mn avec Mw masse moléculaire moyenne en poids) du copolymère à blocs est de préférence inférieure à 3 ; plus préférentiellement inférieure à 2 et encore plus préférentiellement inférieure à 1,5.

Selon l'invention, le bloc polyisobutylène du copolymère à blocs présente une masse moléculaire moyenne en nombre ("Mn") allant de 25 000 g/mol à 350 000g/mol, de préférence 35 000 g/mol à 250 000 g/mol de manière à conférer au TPE de bonnes propriétés élastomériques et une tenue mécanique suffisante et compatible avec l'application gomme interne d'un bandage pneumatique.

Selon l'invention, le bloc polyisobutylène du copolymère à blocs présente en outre une température de transition vitreuse ("tg") inférieure ou égale à à - 20°C, plus préférentiellement inférieure à - 40°C. Une valeur de Tg supérieure à ces minima peut diminuer les performances de la couche étanche lors d'une utilisation à très basse température ; pour une telle utilisation, la Tg du bloc polyisobutylène est plus préférentiellement encore inférieure à - 50°C.

Selon l'invention, le bloc polyisobutylène du copolymère à blocs comprend également un taux d'unités issues d'un ou de plusieurs diènes conjugués insérées dans la chaîne polymérique allant de 0,5% à 6% en poids par rapport au poids du bloc polyisobutylène. En dessous de 0,5%, on observe une dégradation de la propriété d'adhésion de la composition contenant le copolymère à blocs de l'invention sur les compositions de caoutchouc adjacentes dans le pneumatique. Au dessus de 6%, on observe une baisse de la résistance à la thermooxydation et à l'oxydation à l'ozone de la composition contenant le copolymère à blocs de l'invention utilisée dans un pneumatique. Ce taux est préférentiellement compris dans le domaine allant de 1,5% et 5% en poids et plus préférentiellement encore de 2% à 4% en poids.

Les diènes conjugués pouvant être copolymérisés avec l'isobutylène pour constituer le bloc « polyisobutylène » sont des diènes conjugués en C₄ - C₁₄. De préférence, ces diènes conjugués sont choisis parmi l'isoprène, le butadiène, le 1-méthylbutadiène, le 2- méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,5-diméthyl-1,3-hexadiène, le 2-neopentylbutadiène, le 1,3-cyclopentadiène, le 1,3-cyclohexadiène, 1-vinyl-1,3-cyclohexadiène ou leur mélange. Plus préférentiellement le diène conjugué est l'isoprène ou un mélange contenant de l'isoprène.

Le bloc polyisobutylène, selon un aspect avantageux de l'invention, peut être halogéné et comporté des atomes d'halogène dans sa chaîne. Cette halogénation permet d'augmenter la vitesse de cuisson de la composition comprenant le copolymère à blocs selon l'invention. Cette halogénation pennet d'améliorer la compatibilité du TPE avec les autres éléments constitutifs de la composition à base de TPE utilisée dans l'application gomme interne d'un bandage pneumatique. L'halogénation se fait au moyen de brome ou de chlore, préférentiellement du brome, sur les unités issues de diènes conjugués de la chaîne polymérique du bloc polyisobutylène. Seule une partie de ces unités réagit avec l'halogène. Cette partie d'unités issues de diènes conjugués réactive doit néanmoins être telle que le taux d'unités issues de diènes conjugués n'ayant pas réagi avec l'halogène soit d'au moins 0,5% en poids par rapport au poids du bloc polyisobutylène.

Selon une variante de l'invention énoncée plus haut, le bloc polyisobutylène du copolymère à blocs peut être étoilé à au moins trois branches. De préférence le nombre de branches est compris dans un domaine allant de 3 à 6.

Selon l'invention, le ou les blocs styréniques terminaux représentent au plus 16% en poids du poids total du copolymère à blocs, de préférence moins de 15% en poids. Au delà de cette valeur de 16% en poids, on observe une cohésion à chaud insuffisante de la composition comprenant le copolymère à blocs selon l'invention. Ceci se traduit notamment, par une augmentation du module rendant impossible la déformation plastique de ce matériau lors de la confirmation du pneu.

Le ou les blocs styréniques doivent être présents dans des proportions suffisantes pour préserver le caractère thermoplastique de l'élastomère SIBS. Le taux minimum de blocs styréniques du copolymère à blocs peut varier en fonction des conditions d'utilisation du copolymère. A titre d'exemple, un taux minimum de 5% en poids du poids total du copolymère à blocs, peut être envisagé pour une application pneumatique.

Les blocs styréniques sont constitués d'un ou de plusieurs composés styréniques polymérisés. Par composé styrénique doit être entendu dans la présente description tout monomère à base de styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène,), les butylstyrènes (par exemple le para-tertio-butylstyrène), les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène. De préférence, le composé styrénique selon l'invention est le styrène, l'alpha-méthylstyrène, le diphényléthylène, le p-méthylstyrène, le p-tertiobutylstyrène, le p-chlorostyrène ou le p-fluorostyrène.

Les copolymères selon l'invention peuvent être préparés par des procédés de synthèse connus en soi et décrit dans la littérature, notamment celle citée dans la présentation de l'état de la technique de la présente description. L'homme du métier saura choisir les conditions de polymérisation adéquates et réguler les différents paramètres des procédés de polymérisation afin d'aboutir aux caractéristiques spécifiques de structure du copolymère à blocs de l'invention.

Plusieurs stratégies de synthèse peuvent être mises en oeuvre en vue de préparer les copolymères selon l'invention.

Une première consiste en une première étape de synthèse du bloc « polyisobutylène » par polymérisation cationique vivante des monomères à polymériser au moyen d'un amorceur di-fonctionnel ou poly-fonctionnel connu de l'homme de l'art, suivie de la seconde étape de synthèse des blocs styréniques par ajout des monomères styréniques à polymériser sur le « polyisobutylène » vivant obtenu dans la première étape. Ainsi, ces deux étapes sont consécutives, ce qui se traduit par l'ajout séquencé :
- des monomères à polymériser pour la préparation du bloc « polyisobutylène » comprenant un taux d'unités issues d'un ou de plusieurs diènes conjugués allant de 0,5 à 6% en poids du poids total du bloc isobutylène ;
- des monomères à polymériser pour la préparation des blocs styréniques.
A chaque étape, le ou les monomères à polymériser peuvent ou non être ajoutés sous la forme d'une solution dans un solvant tel que décrit ci-après, en présence ou non d'un acide ou d'une base de Lewis tels que décrits ci-après.
Chacune de ces étapes peut être réalisée dans un même réacteur ou dans deux réacteurs de polymérisation différents. A titre préférentiel, ces deux étapes sont réalisées dans un seul et unique réacteur (synthèse en « one-pot »).

La polymérisation cationique vivante s'effectue classiquement en moyen d'un amorceur et éventuellement d'un acide de Lewis jouant le rôle de co-amorceur afin de former in situ un carbocation. Habituellement sont ajoutés des composés électro-donneurs afin de conférer à la polymérisation un caractère vivant.

A titre d'illustration, les amorceurs di-fonctionnels ou polyfonctionnels utilisables pour la préparation des copolymères selon l'invention peuvent être choisis parmi le 1,4-di(2-méthoxy-2-propyl)-benzene (ou « dicumylmethyl ether »), le 1,3,5-tri(2-methoxy-2-propyl)-benzene (ou « tricumylmethylether »), le 1,4-di(2-chloro-2-propyl)-benzene (ou « dicumyl chloride »), le 1,3,5-tri(2-chloro-2-propyl)-benzene (ou « tricumyl chloride), le 1,4-di(2-hydroxy-2-propyl)-benzene, le 1,3,5-tri(2-hydroxy-2-propyl)-benzene, le 1,4-di(2-acetoxy-2-propyl)-benzene, le 1,3,5-tri(2-acetoxy-2-propyl)-benzene, le 2,6-dichloro-2,4,4,6-tetramethylheptane, le 2,6-dihydroxy-2,4,4,6-heptane. A titre préférentiel, sont utilisés les dicumyl éthers, les tricumyl éthers, les halogénures de dicumyle ou les halogénures de tricumyle.

Les acides de Lewis peuvent être choisis parmi les halogénures de métaux, de formule générale MXn où M est un élément choisi parmi Ti, Zr, Al, Sn, P, B, X est un halogène tel que Cl, Br, F ou I et n correspondant au degré d'oxydation de l'élément M. On citera par exemple TiCl4, AlCl3, BCl3, BF3, SnCl4, PCl3, PCl5,. Parmi ces composés TiCl4, AlCl3 et BC13 sont utilisés à titre préférentiel, et TiCl4 à titre encore plus préférentiel.

Les composés électro-donneurs peuvent être choisis parmi les bases de Lewis connues, tels que les pyridines, les amines, les amides, les esters, les sulfoxydes et autres. Parmi eux sont préférés le DMSO (dimethylsulfoxyde) et le DMAc (diméthylacétamide).

La polymérisation cationique vivante s'effectue dans un solvant inerte apolaire ou dans un mélange de solvants inertes apolaire et polaire.

Les solvants apolaires pouvant être utilisés pour la synthèse des copolymères selon l'invention sont par exemple les solvants hydrocarbonés, aliphatiques, cycloaliphatiques ou aromatiques, tels que l'hexane, l'heptane, le cyclohexane, le méthylcyclohexane, le benzène ou le toluène.

Les solvants polaires pouvant être utilisés pour la synthèse des copolymères selon l'invention sont par exemple les solvants halogénés tels que les halogénures d'alcane, comme le chlorure de méthyle (ou chloroforme), le chlorure d'éthyle, le chlorure de butyle, le chlorure de méthylène (ou dichlorométhane) ou les chlorobenzènes (mono-, di- ou tri-chloro).

L'homme du métier saura choisir la composition des mélanges de monomères à utiliser en vue de préparer les copolymères selon l'invention ainsi que les conditions de température adéquates en vue d'atteindre les caractéristiques de masses molaires de ces copolymères.

Une deuxième stratégie de synthèse consiste à préparer séparément :
- un bloc « polyisobutylène » téléchélique ou fonctionnel à ses extrémités de chaînes par polymérisation cationique vivante au moyen d'un amorceur difonctionnel ou polyfonctionnel, suivie éventuellement de réaction de fonctionnalisation sur les extrémités de chaînes,
- les blocs styréniques vivants par exemple par polymérisation anionique,
puis à faire réagir l'un et l'autre pour l'obtention d'un copolymère selon l'invention. La nature des fonctions réactives à chacune des extrémités de chaînes du bloc et la proportion de blocs styréniques vivants par rapport au bloc seront choisies par l'homme du métier pour l'obtention d'un copolymère selon l'invention.

L'halogénation du copolymère selon l'invention est réalisée selon toute méthode connue de l'homme de l'art, notamment celles utilisées pour l'halogénation du caoutchouc butyle et peut se faire par exemple au moyen de brome ou de chlore, préférentiellement du brome, sur les unités issues de diènes conjugués de la chaîne polymérique du bloc polyisobutylène.

Dans certaines variantes de l'invention selon lesquelles l'élastomère SIBS est étoilé ou encore branché, les procédés décrits par exemple dans les articles de Puskas J. Polym. Sci Part A : Polymer Chemistry, vol 36, pp85-82 (1998) et Puskas, J. Polym. Sci Part A : Polymer Chemistry, vol 43, pp1811-1826 (2005) peuvent être mis en oeuvre par analogie pour obtenir des blocs centraux "polyisobutylène" étoilés, branchés ou dendrimères vivants. L'homme du métier saura alors choisir la composition des mélanges de monomères à utiliser en vue de préparer les copolymères selon l'invention ainsi que les conditions de température adéquates en vue d'atteindre les caractéristiques de masses molaires de ces copolymères.

A titre préférentiel, la préparation des copolymères selon l'invention sera réalisée par polymérisation cationique vivante au moyen d'un amorceur difonctionnel ou polyfonctionnel et par ajout séquencés des monomères à polymériser pour la synthèse du bloc « polyisobutène » et des monomères à polymérisation pour la synthèse des blocs styréniques.

Un autre objet de l'invention est une composition élastomère qui comporte au moins, à titre d'élastomère majoritaire (en poids), un copolymère à blocs élastomère thermoplastique SIBS tel que décrit plus haut.

L'élastomère SIBS peut constituer à lui seul la composition élastomère ou bien être associé, dans cette composition, à d'autres constituants pour former une matrice élastomérique.

Si d'éventuels autres élastomères sont utilisés dans cette composition, l'élastomère SIBS selon l'invention constitue l'élastomère majoritaire en poids ; il représente alors de préférence plus de 50%, plus préférentiellement plus de 70% en poids de l'ensemble des élastomères. De tels élastomères complémentaires, de préférence minoritaires, pourraient être par exemple des élastomères diéniques tels que du caoutchouc naturel ou un polyisoprène synthétique, un caoutchouc butyle ou des élastomères thermoplastiques styréniques (TPS) autres que SIBS, dans la limite de la compatibilité de leurs microstructures.

L'élastomère SIBS précédemment décrit est suffisant à lui seul pour que soit remplie la fonction d'étanchéité aux gaz vis-à-vis des objets pneumatiques dans lesquels il peut être utilisé.

Toutefois, selon un mode de réalisation préférentiel de l'invention, ce dernier est utilisé dans une composition qui comporte également, à titre d'agent plastifiant, une huile d'extension (ou huile plastifiante) dont la fonction est de faciliter la mise en oeuvre, particulièrement l'intégration dans l'objet pneumatique par un abaissement du module et une augmentation du pouvoir tackifiant de la couche étanche aux gaz.

On peut utiliser toute huile d'extension, de préférence à caractère faiblement polaire, apte à étendre, plastifier des élastomères, notamment thermoplastiques. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides.

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles.

Il est à noter que l'ajout d'une huile d'extension au SIBS entraîne une perte d'étanchéité de ce dernier, variable selon le type et la quantité d'huile utilisée. On utilise préférentiellement une huile du type polybutène, en particulier une huile polyisobutylène (en abrégé "PIB"), qui a démontré le meilleur compromis de propriétés comparativement aux autres huiles testées, notamment à une huile conventionnelle du type paraffinique.

A titre d'exemples, des huiles polyisobutylène sont commercialisées notamment par la société UNIVAR sous la dénomination "Dynapak Poly" (e.g. "Dynapak Poly 190"), par INEOS Oligomer sous la dénomination "INDOPOL H1200", par BASF sous les dénominations "Glissopal" (e.g. "Glissopal 1000") ou "Oppanol" (e.g. "Oppanol B12") ; des huiles paraffiniques sont commercialisées par exemple par EXXON sous la dénomination "Telura 618" ou par Repsol sous la dénomination "Extensol 51".

La masse moléculaire moyenne en nombre (Mn) de l'huile d'extension est préférentiellement comprise entre 200 et 25 000 g/mol, plus préférentiellement encore comprise entre 300 et 10 000 g/mol. Pour des masses Mn trop basses, il existe un risque de migration de l'huile à l'extérieur de la composition, tandis que des masses trop élevées peuvent entraîner une rigidification excessive de cette composition. Une masse Mn comprise entre 350 et 4 000 g/mol, en particulier entre 400 et 3 000 g/mol, s'est avérée constituer un excellent compromis pour les applications visées, en particulier pour une utilisation dans un bandage pneumatique.

L'homme du métier saura ajuster la quantité d'huile d'extension en fonction des conditions particulières d'usage de la composition, notamment comme couche élastomère étanche aux gaz d'un objet pneumatique.

On préfère que le taux d'huile d'extension soit supérieur à 5 pce, de préférence compris entre 5 et 100 pce (parties en poids pour cent parties d'élastomère total, c'est-à-dire SIBS plus tout autre élastomère éventuel présent dans la composition ou couche élastomère).

En dessous du minimum indiqué, la composition élastomère risque de présenter une rigidité trop forte pour certaines applications tandis qu'au-delà du maximum préconisé, on s'expose à un risque de cohésion insuffisante de la composition et de perte d'étanchéité pouvant être néfaste selon l'application considérée.

Pour ces raisons, en particulier pour une utilisation de la composition étanche dans un bandage pneumatique, on préfère que le taux d'huile d'extension soit supérieur à 10 pce, notamment compris entre 10 et 90 pce, plus préférentiellement encore qu'il soit supérieur à 20 pce, notamment compris entre 20 et 80 pce.

La composition décrite ci-dessus peut comporter par ailleurs les divers additifs usuellement présents dans les couches étanches à l'air connues de l'homme du métier. On citera par exemple des charges renforçantes, telles que du noir de carbone ou de la silice, des charges non renforçantes ou inertes, des agents colorants avantageusement utilisables pour la coloration de la composition, des charges lamellaires améliorant encore l'étanchéité (e.g. phyllosilicates tels que kaolin, talc, mica, graphite, argiles ou argiles modifiées ("organo clays"), des plastifiants autres que les huiles d'extension précitées, des agents de protection tels que antioxydants ou antiozonants, anti-UV, divers agents de mise en oeuvre ou autres stabilisants, ou encore des promoteurs aptes à favoriser l'adhésion au reste de la structure de l'objet pneumatique.

Comparativement aux caoutchoucs butyle, le nouvel SIBS selon l'invention présente l'avantage, en raison de sa nature thermoplastique, de pouvoir être travaillé tel quel à l'état fondu (liquide), et par conséquent d'offrir une possibilité de mise en oeuvre simplifiée de toute composition élastomère le contenant.

Par ailleurs, ce nouvel SIBS induit, à la composition qui le contient, une forte capacité d'adhésion sur les composants en caoutchouc qui lui sont adjacents dans un objet pneumatique, notamment pneumatique de véhicule automobile,

En outre, ce nouvel SIBS, malgré sa nature thermoplastique, confère à une composition qui le contient une bonne cohésion du matériau à chaud, notamment à des températures allant de 150 à 200°C. Ces températures correspondent aux températures de cuisson de pneumatiques de véhicules automobiles. Cette cohésion à haute température permet un démoulage à chaud de ces pneumatiques sans altérer l'intégrité de la gomme intérieur étanche contenant le nouvel SIBS.

Aussi, le nouvel élastomère thermoplastique SIBS selon l'invention permet-il, de manière surprenante, de satisfaire un compromis de propriétés, souvent antinomiques, de cohésion de la composition élastomère qui le contient, notamment à chaud, et d'adhésion de celle-ci sur les compositions de caoutchouc qui lui sont adjacentes dans un objet pneumatique. En outre, le nouvel élastomère thermoplastique confère à la composition le contenant des propriétés hystérétiques améliorées en comparaison avec une composition à base de caoutchouc butyle.

Ces propriétés sont atteintes tout en conférant des propriétés d'étanchéité et d'aptitude à la mise en oeuvre à la composition élastomère contenant le nouvel SIBS.

## Revendications

1. Copolymère à blocs élastomériques thermoplastiques comprenant au moins un bloc élastomérique composé de polyisobutylène et, au moins à une des extrémités du copolymère à blocs, un bloc styrénique constitué d'au moins un composé styrénique polymérisé, **caractérisé en ce que**
1) le bloc polyisobutylène présente une masse moléculaire moyenne en nombre allant de 25 000 g/mol à 250 000g/mol et une température de transition vitreuse inférieure ou égale à -20°C, et comprend un taux d'unités issues d'un ou de plusieurs diènes conjugués insérées dans la chaîne polymérique allant de 0,5% à 6% en poids par rapport au poids du bloc polyisobutylène, et **en ce que**
2) les blocs styréniques représentent au plus 16% en poids du poids total du copolymère à blocs.

2. Copolymère à blocs selon la revendication 1, **caractérisé en ce que** le copolymère présente une structure linéaire tribloc.

3. Copolymère à blocs selon la revendication 1, **caractérisé en ce que** le copolymère présente une structure étoilé à au moins 3 branches et au plus 12 branches dans lequel le bloc polyisobutylène central est étoilé à au moins 3 et au plus 12 branches, chacune étant terminée par un bloc styrénique.

4. Copolymère à blocs selon la revendication 1, **caractérisé en ce que** le copolymère présente une structure dendrimère dans lequel le bloc polyisobutylène central est dendrimère, chacune des branches du polyisobutylène dendrimère étant terminée par un bloc styrénique.

5. Copolymère à blocs selon l'une quelconque des revendications 1 à 4, **caractérisé en ce que** le bloc polyisobutylène comprend un taux d'unités issues d'un ou de plusieurs diènes conjugués insérées dans la chaîne polymérique allant de 1,5% à 5% en poids par rapport au poids du bloc polyisobutylène,

6. Copolymère à blocs selon l'une quelconque des revendications 1 à 5, **caractérisé en ce que** le bloc polyisobutylène présente une température de transition vitreuse inférieure ou égale à -50°C

7. Copolymère à blocs selon l'une quelconque des revendications 1 à 6, **caractérisé en ce que** le bloc polyisobutylène est halogéné.

8. Copolymère à blocs selon l'une quelconque des revendications 1 à 7, **caractérisé en ce que** les blocs styréniques représentent moins de 15% en poids du poids total du copolymère à blocs.

9. Procédé de préparation d'un copolymère à blocs tel que défini dans les revendications 1 à 8, **caractérisé en ce qu'il** comprend
(a) une première étapes de synthèse du bloc « polyisobutylène » comprenant un taux d'unités issues d'un ou de plusieurs diènes conjugués allant de 0,5 à 6% en poids du poids total du bloc isobutylène, lors de laquelle on fait réagir un mélange de monomères comprenant de l'isobutylène et un ou plusieurs monomères diènes conjugués avec un amorceur di-fonctionnel ou poly-fonctionnel dans un solvant inerte apolaire ou dans un mélange de solvants inertes apolaire et polaire afin d'obtenir un « polyisobutylène » vivant, et
(b) une seconde étape de synthèse des blocs styréniques par ajout des monomères styréniques dans le milieu rédactionnel obtenu dans la première étape.

10. Procédé de préparation d'un copolymère à blocs selon la revendication 9, **caractérisé en ce que** on ajoute au milieu réactionnel de la première étape une acide de Lewis choisi parmi les halogénures de métaux, de formule générale MXn où M est un élément choisi parmi Ti, Zr, Al, Sn, P, B, X est un halogène tel que Cl, Br, F ou I et n correspondant au degré d'oxydation de l'élément M.

11. Procédé de préparation d'un copolymère à blocs selon la revendication 9 ou 10, **caractérisé en ce que** on ajoute au milieu réactionnel de la première étape une base de Lewis.

12. Composition élastomère, **caractérisé en ce que** ladite composition comporte au moins, à titre d'élastomère majoritaire, un copolymère à blocs élastomère thermoplastique, tel que défini dans les revendications 1 à 8.

13. Composition selon la revendications 12, **caractérisé en ce que** la masse moléculaire moyenne en nombre (Mn) du copolymère à blocs est comprise entre 30 000 et 500 000 g/mol.

14. Composition selon la revendication 12 ou 13, **caractérisé en ce qu'**elle comprend une huile d'extension de l'élastomère.

15. Composition selon l'une quelconques des revendications 12 à 14, **caractérisé en ce qu'**elle comprend une charge lamellaire.

## Claims

1. Thermoplastic elastomer block copolymer comprising at least one elastomeric block composed of polyisobutylene and, at least at one of the ends of the block copolymer, a styrenic block constituted of at least one polymerized styrenic compound, **characterized in that**
1) the polyisobutylene block has a number-average molecular weight ranging from 25 000 g/mol to 250 000 g/mol and a glass transition temperature of less than or equal to -20°C, and comprises an amount of units derived from one or more conjugated dienes inserted in the polymer chain ranging from 0.5% to 6% by weight relative to the weight of the polyisobutylene block; and **in that**
2) the styrenic blocks represent at most 16% by weight of the total weight of the block copolymer.

2. Block copolymer according to Claim 1, **characterized in that** the copolymer has a linear triblock structure.

3. Block copolymer according to Claim 1, **characterized in that** the copolymer has a star-shaped structure with at least 3 branches and at most 12 branches in which the central polyisobutylene block is star-shaped with at least 3 and at most 12 branches, each branch being terminated by a styrenic block.

4. Block copolymer according to Claim 1, **characterized in that** the copolymer has a dendrimer structure in which the central polyisobutylene block is dendritic, each of the branches of the dendritic polyisobutylene being terminated by a styrenic block.

5. Block copolymer according to any one of Claims 1 to 4, **characterized in that** the polyisobutylene block comprises an amount of units derived from one or more conjugated dienes inserted in the polymer chain ranging from 1.5% to 5% by weight relative to the weight of the polyisobutylene block.

6. Block copolymer according to any one of Claims 1 to 5, **characterized in that** the polyisobutylene block has a glass transition temperature of less than or equal to -50°C.

7. Block copolymer according to any one of Claims 1 to 6, **characterized in that** the polyisobutylene block is halogenated.

8. Block copolymer according to any one of Claims 1 to 7, **characterized in that** the styrenic blocks represent less than 15% by weight of the total weight of the block copolymer.

9. Process for preparing a block copolymer as defined in Claims 1 to 8, **characterized in that** it comprises:
(a) a first step of synthesis of the "polyisobutylene" block comprising an amount of units derived from one or more conjugated dienes ranging from 0.5% to 6% by weight of the total weight of the isobutylene block, during which a mixture of monomers comprising isobutylene and one or more conjugated diene monomers is reacted with a difunctional or polyfunctional initiator in an apolar inert solvent or in a mixture of apolar and polar inert solvents in order to obtain a living "polyisobutylene"; and
(b) a second step of synthesis of the styrenic blocks by addition of the styrenic monomers to the reaction medium obtained in the first step.

10. Process for preparing a block copolymer according to Claim 9, **characterized in that** a Lewis acid, chosen from metal halides of general formula MXn where M is an element chosen from Ti, Zr, Al, Sn, P and B, and X is a halide such as Cl, Br, F or I, and n corresponding to the degree of oxidation of the element M, is added to the reaction medium of the first step.

11. Process for preparing a block copolymer according to Claim 9 or 10, **characterized in that** a Lewis base is added to the reaction medium of the first step.

12. Elastomer composition, **characterized in that** said composition comprises at least, as the predominant elastomer, one thermoplastic elastomer block copolymer as defined in Claims 1 to 8.

13. Composition according to Claim 12, **characterized in that** the number-average molecular weight (Mₙ) of the block copolymer is between 30 000 and 500 000 g/mol.

14. Composition according to Claim 12 or 13, **characterized in that** it comprises an extender oil for the elastomer.

15. Composition according to any one of Claims 12 to 14, **characterized in that** it comprises a platy filler.

## Patentansprüche

1. Thermoplastisches elastomeres Blockcopolymer mit mindestens einem elastomeren Block aus Polyisobutylen und einem Styrolblock aus mindestens einer polymerisierten Styrolverbindung an mindestens einem der Enden des Blockcopolymers, **dadurch gekennzeichnet, dass**
1) der Polyisobutylenblock ein zahlenmittleres Molekulargewicht von 25.000 g/mol bis 250.000 g/mol und eine Glasübergangstemperatur kleiner gleich -20°C aufweist und einen Gehalt an Einheiten, die sich von einem oder mehreren in die Polymerkette insertierten konjugierten Dienen ableiten, von 0,5 bis 6 Gew.-%, bezogen auf das Gewicht des Polyisobutylenblocks, aufweist und
2) die Styrolblöcke höchstens 16 Gew.-% des Gesamtgewichts des Blockcopolymers ausmachen.

2. Blockcopolymer nach Anspruch 1, **dadurch gekennzeichnet, dass** das Copolymer eine lineare Dreiblockstruktur aufweist.

3. Blockcopolymer nach Anspruch 1, **dadurch gekennzeichnet, dass** das Copolymer eine sternverzweigte Struktur mit mindestens 3 Armen und höchstens 12 Armen aufweist, wobei der zentrale Polyisobutylenblock mit mindestens 3 und höchstens 12 Armen sternverzweigt ist, wobei jeder der Arme durch einen Styrolblock terminiert ist.

4. Blockcopolymer nach Anspruch 1, **dadurch gekennzeichnet, dass** das Copolymer eine dendrimere Struktur aufweist, in der der zentrale Polyisobutylenblock dendrimer ist, wobei jeder der Arme des dendrimeren Polyisobutylens durch einen Styrolblock terminiert ist.

5. Blockcopolymer nach einem der Ansprüche 1 bis 4, **dadurch gekennzeichnet, dass** der Polyisobutylenblock einen Gehalt an Einheiten, die sich von einem oder mehreren in die Polymerkette insertierten konjugierten Dienen ableiten, von 1,5 bis 5 Gew.-%, bezogen auf das Gewicht des Polyisobutylenblocks, aufweist.

6. Blockcopolymer nach einem der Ansprüche 1 bis 5, **dadurch gekennzeichnet, dass** der Polyisobutylenblock eine Glasübergangstemperatur kleiner gleich -50°C aufweist.

7. Blockcopolymer nach einem der Ansprüche 1 bis 6, **dadurch gekennzeichnet, dass** der Polyisobutylenblock halogeniert ist.

8. Blockcopolymer nach einem der Ansprüche 1 bis 7, **dadurch gekennzeichnet, dass** die Styrolblöcke weniger als 15 Gew.-% des Gesamtgewichts des Blockcopolymers ausmachen.

9. Verfahren zur Herstellung eines Blockcopolymers gemäß den Ansprüchen 1 bis 8, **dadurch gekennzeichnet, dass** es Folgendes umfasst:
(a) einen ersten Schritt der Synthese des "Polyisobutylen"-Blocks, der einen Gehalt an Einheiten, die sich von einem oder mehreren konjugierten Dienen ableiten, von 0,5 bis 6 Gew.-%, bezogen auf das Gesamtgewicht des Isobutylenblocks, aufweist, bei dem man eine Monomerenmischung, die Isobutylen und ein oder mehrere konjugierte Dienmonomere umfasst, in einem unpolaren inerten Lösungsmittel oder in einer Mischung von unpolaren und polaren inerten Lösungsmitteln mit einem difunktionellen oder polyfunktionellen Initiator zu einem lebenden "Polysiobutylen" umsetzt, und
(b) einen zweiten Schritt der Synthese der Styrolblöcke durch Zugabe von Styrolmonomeren zu dem im ersten Schritt erhaltenen Reaktionsgemisch.

10. Verfahren zur Herstellung eines Blockcopolymers nach Anspruch 9, **dadurch gekennzeichnet, dass** man das Reaktionsmedium des ersten Schritts mit einer unter Metallhalogeniden der allgemeinen Formel MXn, wobei M für ein unter Ti, Zr, Al, Sn, P und B ausgewähltes Element steht, X für ein Halogen wie Cl, Br, F oder I steht und n der Oxidationsstufe des Elements M entspricht, ausgewählten LewisSäure versetzt.

11. Verfahren zur Herstellung eines Blockcopolymers nach Anspruch 9 oder 10, **dadurch gekennzeichnet, dass** man das Reaktionsmedium des ersten Schritts mit einer Lewis-Base versetzt.

12. Elastomerzusammensetzung, **dadurch gekennzeichnet, dass** die Zusammensetzung mindestens als Hauptelastomer ein thermoplastisches elastomeres Blockcopolymer gemäß den Ansprüchen 1 bis 8 enthält.

13. Zusammensetzung nach Anspruch 12, **dadurch gekennzeichnet, dass** das zahlenmittlere Molekulargewicht (Mn) des Blockcopolymers zwischen 30.000 und 500.000 g/mol liegt.

14. Zusammensetzung nach Anspruch 12 oder 13, **dadurch gekennzeichnet, dass** sie ein Strecköl für das Elastomer umfasst.

15. Zusammensetzung nach einem der Ansprüche 12 bis 14, **dadurch gekennzeichnet, dass** sie einen plättchenförmigen Füllstoff umfasst.
